# EUROPÄISCHE PATENTSCHRIFT

(11) **EP 1 883 874 B1**
(45) Veröffentlichungstag und Bekanntmachung des Hinweises auf die Patenterteilung: **11.11.2009**
(21) Anmeldenummer: 06763173.9
(22) Anmeldetag: 17.05.2006
(51) Int. Cl.: G05B 23/02

(54) **VERFAHREN ZUR ÜBERWACHUNG EINER AUTOMATISIERTEN INDUSTRIELLEN ANLAGE**
METHOD FOR MONITORING AN AUTOMATIC INDUSTRIAL ARRANGEMENT
PROCEDE POUR SURVEILLER UNE INSTALLATION INDUSTRIELLE AUTOMATISEE

(30) Priorität: 27.05.2005 DE 102005024385
(43) Veröffentlichungstag der Anmeldung: 06.02.2008
(73) Patentinhaber: SIEMENS AKTIENGESELLSCHAFT, 80333 München (DE)
(72) Erfinder: MAIER, Rupert, 91330 Eggolsheim (DE); MICHAELIS, Gerd, 91096 Möhrendorf (DE); SYKOSCH, Ralf, 91365 Weilersbach (DE)
(86) Internationale Anmeldenummer: PCT/EP2006/062390
(87) Internationale Veröffentlichungsnummer: WO 2006/125741

(56) Entgegenhaltungen:
- US-A- 5 210 704
- US-A- 5 602 761
- US-A1- 2002 029 130
- US-A1- 2003 014 500
- US-A1- 2003 216 879

## Beschreibung

Die Erfindung betrifft ein Verfahren zur Überwachung einer automatisierten industriellen Anlage, insbesondere zur vorausschauenden Wartung der Anlage.

Ein industrieller Anlagenprozess einer automatisierten Anlage umfasst eine Vielzahl einzelner, miteinander wechselwirkender Teilprozesse. Für eine hohe Produktivität muss ein zuverlässiger Prozessablauf sichergestellt sein. Um dies zu erreichen wird die industrielle Anlage einer regelmäßigen Wartung und Instandhaltung unterzogen. Diese Wartungs- und Instandhaltungsarbeiten erfolgen üblicherweise in regelmäßigen Zeitabständen. Im Rahmen derartiger Arbeiten werden beispielsweise Schaltelemente ausgetauscht, Betriebsmittel erneuert oder auch komplette Maschinenteile ersetzt.

Trotz dieser Arbeiten besteht allerdings die Gefahr, dass Störungen auftreten, die zu Produktionsausfällen führen können. Aufgrund der Komplexität der ineinander greifenden Teilprozesse ist eine Vorhersage über mögliche zukünftige Fehler schwierig. Eine Überwachung und Fehlersuche während des laufenden Anlagenprozesses gestaltet sich zudem aufgrund der großen anfallenden Datenmengen schwierig, die für eine Fehleranalyse ausgewertet werden müssten. Die Überwachung und Kontrolle wird daher oftmals nur stichprobenartig durchgeführt.

Zur Überwachung von automatisierten industriellen Anlagen werden regelmäßig Zustandsdaten der einzelnen Komponenten der Anlage gemessen und analysiert, wie beispielsweise aus der US 5,210,704 zu entnehmen ist.

Aus der US 2002/0031045 A1 ist ein Verfahren zur Überwachung eines chemischen Prozesses zu entnehmen, bei dem Transienten eines Motorsignals ausgewertet werden. Mit der Auswertung des Motorsignals sollen unerwünschte Inhomogenitäten in einem Polymerisationsreaktor frühzeitig erkannt werden.

Aus der US 6,205,409 B1 ist die Überwachung eines so genannten "mass flow controllers" (MFC) vorgesehen, bei dem die Ansteuerspannung eines Ventils des MFC's überprüft wird.

Der Erfindung liegt die Aufgabe zugrunde, eine einfache und dennoch umfassende Überwachung eines automatisierten industriellen Anlagenprozesses zu ermöglichen.

Die Aufgabe wird gemäß der Erfindung gelöst durch das Verfahren gemäß Patentanspruch 1. Mit dem Verfahren wird eine automatisierte industrielle Anlage auf bestehende oder zukünftige mögliche Fehler hin überwacht, insbesondere auch zur vorausschauenden Wartung. Die Anlage weist eine Vielzahl von Anlagenkomponenten auf, die während des Anlagenprozesses von einer zentralen Steuereinheit aus automatisch mit Hilfe von Steuersignalen gesteuert werden. Bei dem Verfahren werden hierbei zunächst für den Verlauf eines jeweiligen Steuersignals oder für eine hieraus abgeleitete Größe eine zu erwartende Signalcharakteristik definiert. Während des laufenden Anlagenprozesses wird dann der Verlauf eines jeweiligen aktuellen Steuersignals ausgewertet und eine aktuelle Signalcharakteristik erstellt. Diese wird mit der zu erwartenden Signalcharakteristik verglichen. Bei einer unzulässigen Abweichung von der zu erwartenden Signalcharakteristik wird die aktuelle Signalcharakteristik als eine anomale Signalcharakteristik eingestuft. Aus der so ermittelten anomalen Signalcharakteristik werden dann insbesondere Aussagen im Hinblick auf bestehende oder zukünftige mögliche Fehler abgeleitet. Gleichermaßen ist dieses Verfahren auch zur aktuellen bedarfsweisen Diagnose im Fehlerfall geeignet. Durch das gewählte Verfahren besteht hier die Möglichkeit, aus der Vielzahl der Informationen problemlos die relevanten Informationen herauszufiltern und die potentielle Fehlerquelle zu lokalisieren.

Dabei ist vorgesehen, dass aus dem aktuellen Steuersignal der Wert einer Größe abgeleitet und der Verlauf dieses Werts einer statistischen Analyse, insbesondere Vergleichsanalyse unterzogen wird. Das Ergebnis der statistischen Analyse bildet die aktuelle Signalcharakteristik. Bei einem binären, digitalen Schaltsignal gibt es beispielsweise exakt zwei Werte, nämlich 1 und 0. Bei analogen Signalen wird der Wert beispielsweise durch das Maximum, das Minimum, das Maximum oder Minimum der Ableitung etc. gebildet. Mit Hilfe der statistischen Analyse wird beispielsweise ermittelt, wie häufig innerhalb eines vorgegebenen Zeitintervalls ein bestimmter Wert eingenommen, überschritten unterschritten etc. wird. Die hieraus resultierende Häufigkeit oder Häufigkeitsverteilung wird mit einer zu erwartenden Verteilung verglichen.

Dieses Verfahren geht hierbei von der Erkenntnis aus, dass die in einem automatisierten Prozess auftretenden Signale gewissen allgemein gültigen Regeln folgen müssen und dass eine Abweichung hiervon auf eine mögliche Störung oder eine mögliche Fehlerquelle hindeutet. Diese allgemeinen Regeln schlagen sich in den speziellen Signalcharakteristiken der Steuersignale nieder. Die Erfindung geht weiterhin von der Überlegung aus, dass es bereits ausreichend ist, die Steuersignale im Hinblick auf ihre Signalcharakteristik zu untersuchen. Es brauchen keine aktuellen Zustandsdaten der Anlagenkomponenten erfasst zu werden, wie beispielsweise die aktuelle Betriebstemperatur, der aktuelle Betriebsdruck usw. Da für die Überwachung keine Zustandsgrößen der Vielzahl der einzelnen Komponenten benötigt werden, ist die für die Überwachung herangezogene Datenmenge vergleichsweise gering und damit einfach handhabbar. Das Verfahren eignet sich daher insbesondere auch zur Online-Analyse, d.h. zur dauernden und begleitenden Überwachung und Kontrolle des Anlagenprozesses während des Betriebs.

Unter Steuersignale werden hier allgemein sowohl digitale und binäre Signale als auch analoge Signale verstanden, mit deren Hilfe die einzelnen Anlagenkomponenten angesteuert werden. Derartige Steuersignale sind beispielsweise binäre Schaltsignale in Form von Spannungsimpulsen oder auch analoge Stromsignale, die beispielsweise den Betriebsstrom für einen Antrieb darstellen.

Gemäß einer zweckdienlichen Weiterbildung werden die im Anlagenprozess auftretenden Steuersignale verschiedenen Signaltypen zugeordnet und für jeden Signaltyp wird zumindest eine zu erwartende Signalcharakteristik vorgegeben, die dann mit der aktuellen Signalcharakteristik des aktuellen Steuersignals des gleichen Signaltyps verglichen wird. Diese Ausgestaltung baut auf der Erkenntnis weiter auf, dass die einzelnen Prozess- oder Steuersignale bestimmten Regeln unterworfen sind, die sich in bestimmten charakteristischen Abläufen ausdrücken. Da diese Regeln eine gewisse Allgemeingültigkeit haben, lassen sich die einzelnen Steuersignale typisieren und zu gleichartigen Gruppen zusammenfassen. Jedes Signal eines Signaltyps muss hierbei den gleichen allgemeinen Regeln gehorchen. Prinzipiell besteht hier die Möglichkeit, zu den einzelnen Signaltypen weitere Unterteilungen in Unterklassen vorzunehmen. Durch die Zuordnung der Steuersignale zu unterschiedlichen Signaltypen mit signaltyp-spezifischen Charakteristiken wird die zu verarbeitende Datenmenge weiter verringert und das Verfahren zur Überwachung wird insgesamt sehr transparent und einfach.

In einer bevorzugten Weiterbildung wird ein für den Anlagenprozess oder auch für einen Teilprozess des Anlagenprozesses charakteristisches Zeitintervall nach Art einer Zeitkonstanten vorgegeben. Für dieses Zeitintervall wird die zu erwartende Signälcharakteristik definiert und die aktuelle Signalcharakteristik wird jeweils über das Zeitintervall erfasst und anschließend ausgewertet. Industrielle Fertigungsprozesse sind oftmals gekennzeichnet durch bestimmte Zeitkonstanten, innerhalb derer gewisse Prozessabläufe stattfinden und abgeschlossen werden. Das Steuersignal wird daher gemäß der bevorzugten Ausgestaltung über den vorgegebenen Zeitintervall hinweg beobachtet und im Hinblick auf die für diesen Zeitintervall zu erwartende Signalcharakteristik analysiert. Eine derartige Zeitkonstante wird beispielsweise durch die Taktrate eines Fließbands vorgegeben, d.h. durch die definierte Geschwindigkeit, mit der ein zu fertigender Gegenstand von einem Bearbeitungsplatz zum nächsten Bearbeitungsplatz transportiert wird. Innerhalb dieser vorgegebenen Zeitkonstante darf beispielsweise ein bestimmtes Steuersignal nur einmal auftreten. Eine Abweichung hiervon deutet auf eine Fehlfunktion hin. Innerhalb des Zeitintervalls erfolgen in diesem Beispiel daher vorzugsweise eine Vielzahl von aufeinander abgestimmten Teilprozessen, die gewissen Regeln gehorchen, wie beispielsweise Verbinden zweier Bauteile, Bohren eines Loches durch die beiden Bauteile, Einsetzen einer Schraube usw.

Gemäß einer zweckdienlichen Weiterbildung werden aus den ermittelten anomalen Signalcharakteristiken Rückschlüsse auf Fehler gezogen, wie beispielsweise Verdrahtungsfehler, Softwarefehler oder logische Fehler, die nicht auf technische Fehlfunktionen der einzelnen Anlagenkomponenten zurückzuführen sind. In dem Anlagenprozess bilden die einzelnen Anlagenkomponenten im Hinblick auf ihre technische Funktionsfähigkeit eine mögliche Fehlerquelle. Weitere Fehlerquellen bestehen jedoch in hiervon unabhängigen Verdrahtungsfehlern, Softwarefehlern oder logischen Fehlern. Ein besonderer Vorteil des vorliegenden Verfahrens besteht nunmehr darin, dass auch diese "soften" Fehler erfasst werden können. So weist beispielsweise eine im Vergleich zu der zu erwartenden Signalcharakteristik invertierte Signalcharakteristik auf einen Verdrahtungsfehler hin.

Vorzugsweise werden die Signalcharakteristiken zweier definiert miteinander korrelierten Steuersignale dahingehend analysiert, ob die Charakteristiken die Korrelation wiedergeben. Die einzelnen Signale sind durch gewisse logische oder physikalische Regeln miteinander verknüpft. Ein Vergleich der beiden Signalcharakteristiken führt daher zu einer Art resultierender Signalcharakteristik, die wiederum einem bestimmten Muster folgen muss, welches durch die feste Korrelation zwischen den beiden Signalen bestimmt ist. Ein besonderer Vorteil hierbei ist, dass über die Korrelation der beiden Signale und ihr Zusammenwirken keine Informationen vorliegen müssen. Es braucht lediglich hinterlegt zu sein, wie die beiden zu vergleichenden Signalcharakteristiken miteinander korreliert sein müssen.

Gemäß einer zweckdienlichen Weiterbildung ist das Steuersignal insbesondere ein Regelsignal mit einem sich insbesondere kontinuierlich verändernden Signalwert, aus dem ein gleitender Mittelwert abgeleitet wird. Dieser wird dann zur Analyse herangezogen. Zur Analyse wird hierbei zweckdienlicherweise aus einem Vergleich zwischen dem Verlauf des Signalwerts und dem Verlauf des gleitenden Mittelwerts die aktuelle Signalcharakteristik erstellt. Der gleitende Mittelwert wird hierbei gebildet durch die sukzessive Mittelwertbildung über die Werte des Signals, bezogen auf vorgegebene inkrementelle Zeitintervalle. Insbesondere bei einer Regelung schwankt das Steuersignal um einen vorgegebenen, veränderbaren Wert. So variiert beispielsweise die das Steuersignal bildende Steuerspannung für einen drehzahlgeregelten Motor eines Ventils und steigt beim Schließen des Ventils an und fällt, nachdem das Ventil geschlossen ist, wieder ab. Überschreiten die Schwankungen gewisse Ausschläge um den gleitenden Mittelwert, so ist dies ein Indiz für eine fehlerhafte Regelung.

Um eine manuelle Auswertung der erkannten anomalen Signalcharakteristiken zu erleichtern, werden zweckdienlicherweise die Anomalien in der jeweiligen Signalcharakteristik für den Betrachter gekennzeichnet.

Ein Ausführungsbeispiel der Erfindung wird im Folgenden anhand der Figur näher erläutert. Es zeigen jeweils in schematischen und vereinfachten Darstellungen
- FIG 1: eine stark vereinfachte ausschnittsweise Blockbild- Darstellung einer automatisierten industriellen An- lage,
- FIG 2: ein Ablaufdiagramm zur Illustration des Verfahrens,
- FIG 3: einen analogen Signalverlauf eines Steuersignals,
- FIG 4: eine erste aus dem in Fig. 3 dargestellten Signal- verlauf abgeleitete Signalcharakteristik, die mit Hilfe einer statistischen Analyse erstellt wurde, und
- FIG 5: eine zweite aus dem in Fig. 3 dargestellten Signal- verlauf abgeleitete Signalcharakteristik, die eben- falls mit Hilfe einer statistischen Analyse er- stellt wurde.

Bei einer automatisierten industriellen Anlage 2 werden eine Vielzahl von einzelnen Anlagenkomponenten 4 von einer zentralen Steuereinheit 6 aus angesteuert. Hierzu tauscht die Steuereinheit 6 mit den Komponenten 4 Steuersignale S aus. Im einfachsten Fall werden die Steuersignale S von der Steuereinheit 6 zur Komponente 4 übermittelt. Ergänzend hierzu besteht auch die Möglichkeit, dass von den Komponenten 4 zur Steuereinheit 6 rückwirkende Steuersignale S übermittelt werden, wie dies durch die gestrichelte Linie dargestellt ist. Dies ist insbesondere bei Regelkreisen der Fall.

Zur Durchführung des Verfahrens zur Überwachung des Anlagenprozesses der automatisierten Anlage 2 und insbesondere zur vorausschauenden Wartung der Anlage 2 ist eine Auswerteeinheit 8 vorgesehen, in der der jeweilige Verlauf von ausgewählten Steuersignalen S ausgewertet und analysiert wird. Die Steuersignale werden hierbei von einer Signalerfassungseinheit 10 rückwirkungsfrei, also ohne Einfluss auf das eigentliche Steuersignal S, erfasst und an die Auswerteeinheit 8 übermittelt. Das Ergebnis der Analyse wird auf einer Ausgabeeinheit 12, beispielsweise einem Bildschirm oder einem Drucker, dargestellt.

Die automatisierte Anlage weist in der Realität in der Regel einen überaus komplexen Aufbau auf, bei der eine Vielzahl von einzelnen Elementen störungsfrei miteinander zusammenwirken müssen. Diese Elemente der Anlage sind zum einen die angesteuerten Anlagenkomponenten 4. Dies sind beispielsweise Ventile, Antriebe oder deren Bauteile. Weiterhin umfasst die Anlage eine oder mehrere Steuereinheiten 6. In dieser Steuereinheit 6 ist eine hier nicht näher dargestellte Steuerungssoftware hinterlegt, die den Ablaufprozess steuert. Die einzelnen Anlagenkomponenten sowie die Steuereinheit 4 sind insgesamt untereinander über Datenleitungen, aber auch über Energieversorgungsleitungen, beispielsweise Strom- oder Gasleitungen, miteinander vernetzt. Die Steuereinheit 6 mit ihrer Steuerungssoftware sowie diese Leitungen sind weitere Elemente der Anlage 2.

Üblicherweise werden von den Anlagenkomponenten 4 fortlaufend Zustandsdaten, wie beispielsweise Daten zur Temperatur, zum Druck etc. erfasst. Die hierbei anfallende Datenmenge ist bei einem komplexen automatisierten System sehr groß, so dass eine fortlaufende dauernde Auswertung dieser Daten im Hinblick auf eine Fehleranalyse sehr aufwändig ist.

Zur Überwachung, insbesondere zur vorausschauenden Wartung der Anlage 2, ist nunmehr lediglich die Auswertung der Steuersignale S vorgesehen. Eine Analyse der tatsächlichen Zustände der Anlagenkomponenten 4 erfolgt im Rahmen des hier vorgeschlagenen Verfahrens nicht. Natürlich besteht die Möglichkeit, die Zustandsdaten der Anlagenkomponenten 4 für eine ergänzende Analyse heranzuziehen. In einem automatisierten System gehorchen die Steuersignale S vorbestimmten Regeln und Charakteristiken. Diese Regeln sind hierbei unabhängig von der speziellen Ausgestaltung der einzelnen Anlagenkomponenten 4. Diese Kenntnis wird bei dem vorliegenden Verfahren dahingehend ausgenutzt, dass die Steuersignale S im Hinblick auf Abweichungen von diesen übergeordneten Regeln untersucht werden.

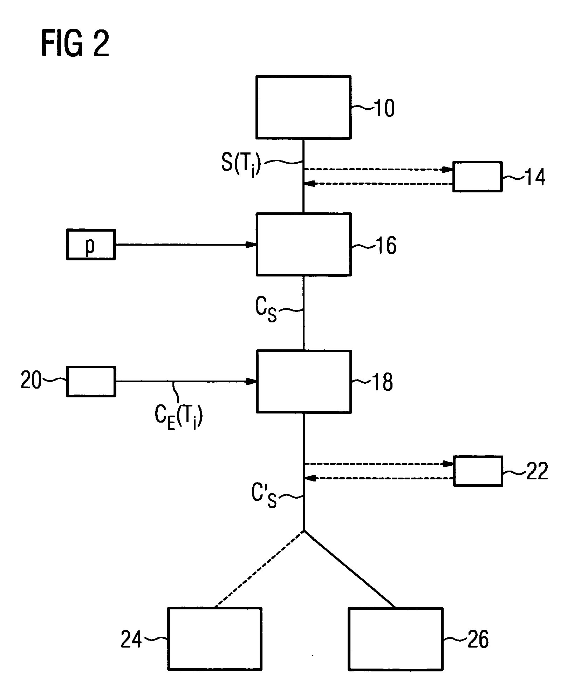

Das nachfolgend zu der FIG 2 anhand des schematischen Flussdiagramms erläuterte Verfahren zur Überwachung der Anlage 2 ermöglicht hierbei insbesondere das Lokalisieren und auch das Quantifizieren von Fehlerquellen in der Anlage. Zur Überwachung werden hierbei ausgewählte Steuersignale S(Tᵢ) im Hinblick auf ihren zeitlichen Verlauf ausgewertet. Aus diesem Signalverlauf wird eine aktuelle Signalcharakteristik C_{S} extrahiert. Diese aktuelle Signalcharakteristik C_{S} wird mit einer zu erwartenden Signalcharakteristik C_{E}(Tᵢ) verglichen. Bei einer unzulässigen Abweichung von der erwarteten Signalcharakteristik C_{E}(Tᵢ) wird die aktuelle Signalcharakteristik als eine anomale Signalcharakteristik C'_{S} gewertet. Eine solche anomale Signalcharakteristik C'_{S} ist ein Indiz für einen bereits bestehenden oder einen möglicherweise zukünftig auftretenden Fehler. Dieses Verfahren ist daher gleichermaßen auf akute Störfälle als auch für Maßnahmen im Sinne einer vorausschauenden Instandhaltung oder Wartung anwendbar.

Die im Anlagenprozess auftretenden Steuersignale S(Tᵢ) lassen sich allgemein bestimmten Signaltypen Tᵢ zuordnen. Es besteht daher die Möglichkeit, zu mehreren Steuersignalen S(Tᵢ) eines gleichen Signaltyps Tᵢ eine gemeinsam zu erwartende Signalcharakteristik C_{E}(Tᵢ) oder einen gemeinsamen Satz von zu erwartenden Signalcharakteristiken C_{E}(Tᵢ) zu hinterlegen.

Bei dem Verfahren erfolgt im ersten Schritt die Erfassung der ausgewählten Signale S(Tᵢ) mit Hilfe der Signalerfassungseinheit 10. Aufgrund der durch die Beschränkung auf die Steuersignale S(Tᵢ) vergleichsweise geringen Datenmenge besteht die Möglichkeit, dieses Verfahren online, also während des laufenden Anlagenprozesses und begleitend zu diesem durchzuführen. Falls eine solche Online-Auswertung nicht erfolgt, werden für eine nachträglich Offline-Auswertung die erfassten Verläufe der Steuersignale S(Tᵢ) in einem ersten Speicher 14 abgelegt.

Im nächsten Schritt werden die Verläufe der Steuersignale S(Tᵢ) in einer Signalaufbereitungseinheit 16 im Hinblick auf für dieses Steuersignal S(Tᵢ) bzw. diesen Signaltyp Tᵢ charakteristische Auswerteparameter p aufbereitet. Die Auswerteparameter p werden hierbei der Signalaufbereitungseinheit 16 vorgegeben. So wird beispielsweise vorgegeben, dass ein analoger Signalverlauf im Hinblick auf seine Maximal- oder seine Minimalwerte, seine Steigung, die Maxima und Minima der Steigung, im Hinblick auf einen gleitenden Mittelwert etc. ausgewertet wird. D.h. anhand der Vorgabe der Auswerteparameter p werden diese einzelnen Merkmale aus dem Signalverlauf extrahiert. Ein wichtiger Auswerteparameter p ist hierbei insbesondere auch die Vorgabe eines charakteristischen Zeitintervalls ΔT, innerhalb dessen der Signalverlauf ausgewertet wird. Die Auswerteparameter P geben daher allgemein die Regeln vor, nach denen der Signalverlauf analysiert wird. Das Ergebnis dieser Analyse ergibt eine aus dem aktuellen Signalverlauf abgeleitete Signalcharakteristik C_{S}.

Diese wird nachfolgend an eine Vergleichseinheit 18 weitergeleitet. In dieser wird die aktuell ermittelte Signalcharakteristik C_{S} mit der dem jeweiligen Auswerteparameter zugeordneten zu erwartenden signaltypspezifischen Signalcharakteristik C_{E}(Tᵢ) verglichen. In einem zweiten Speicher 20 sind eine Vielzahl derartiger zu erwartender Signalcharakteristiken C_{E}(Tᵢ) hinterlegt. Anhand vorgegebener Regeln werden in der Vergleichseinheit 18 diejenigen aktuellen Signalcharakteristiken C_{S} als anomale Signalcharakteristiken C'_{S} charakterisiert, die von den Referenzsignalcharakteristiken C_{E}(Tᵢ) in unzulässiger Weise abweichen. Eine unzulässige Abweichung ist hierbei eine Abweichung über einen vorgegebenen Toleranzbereich hinaus.

Im Falle der Online-Analyse werden die anomalen Signalcharakteristiken C'_{S} in einem dritten Speicher 22 für eine spätere eingehende Auswertung abgelegt. Gleichzeitig erfolgt bei der Online-Analyse mit Hilfe eines Signalgebers 24 ein Warnsignal als sofortiger Hinweis auf einen bestehenden oder einen zukünftig möglichen Fehler. Alternativ oder parallel hierzu wird mit einer Analyseeinheit 26 die erfasste Anomalie bewertet und hieraus automatische ein Vorschlag für ein weiteres Vorgehen oder für zu treffende Maßnahmen erstellt. Die Analyse erfolgt hier beispielsweise anhand von Erfahrungswerten. Alternativ zu der automatischen Analyse wird die Analyse manuell von geschultem Fachpersonal vorgenommen, welches dann die Entscheidungen für die weiteren Maßnahmen trifft. Bei der automatischen Analyse mittels der Analyseeinheit 26 wird darüber hinaus bevorzugt automatisch eine Sicherungsmaßnahme eingeleitet.

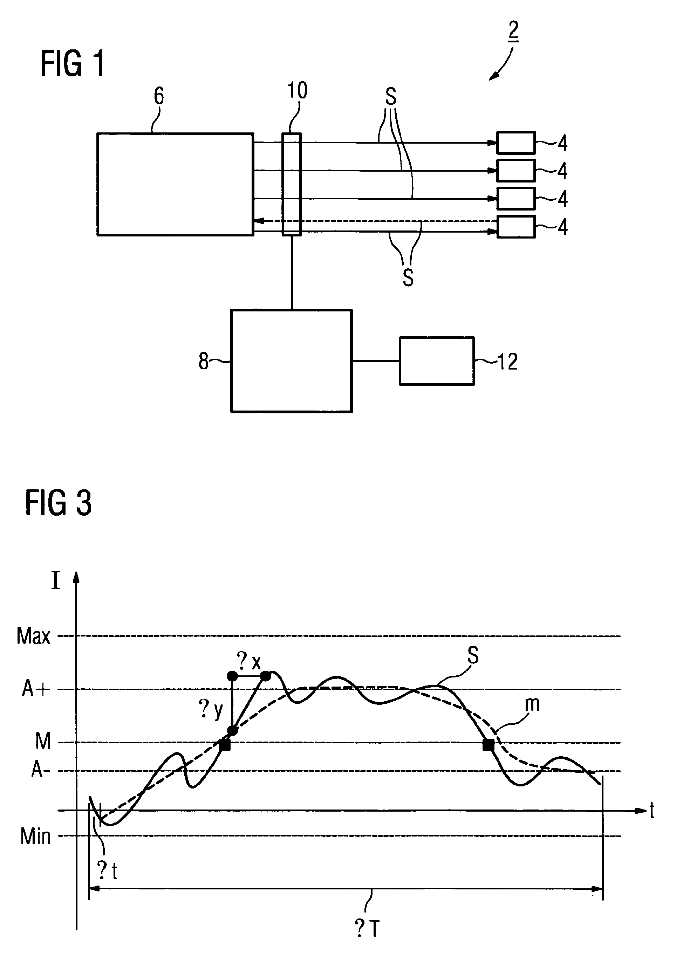

Die Auswertung eines analogen Signalverlaufs im Hinblick auf vorgegebene charakteristische Parameter und die Erstellung einer Signalcharakteristik C_{S} wird im Folgenden anhand der FIG 3 bis 5 erläutert. In FIG 3 ist als analoges Signal der Strom J gegenüber der Zeit t aufgetragen. Die durchgezogene Linie in FIG 3 zeigt den Verlauf des erfassten Steuersignals S innerhalb eines vorgegebenen Zeitintervalls ΔT. Die gepunktete Linie gibt einen so genannten gleitenden Mittelwert m an. Der gleitende Mittelwert wird erhalten durch die Mittelwertbildung der Werte des Steuersignals S in vorgebbaren inkrementellen Auswerte-Zeitintervallen Δt Die mit einem Quadrat gekennzeichneten Stellen geben die Zeitpunkte an, an denen ein Durchgang durch einen vorgegebenen Mittelwert M erfolgt. Auf der Y-Achse sind ein oberer Arbeitswert A+ sowie ein unterer Arbeitswert A- aufgetragen. Weiterhin sind als charakteristische Vorgabewerte ein Maximalwert Max sowie ein Minimalwert Min eingetragen. Die Steigung des Signalverlaufs wird durch das Verhältnis ΔY/ΔX bestimmt.

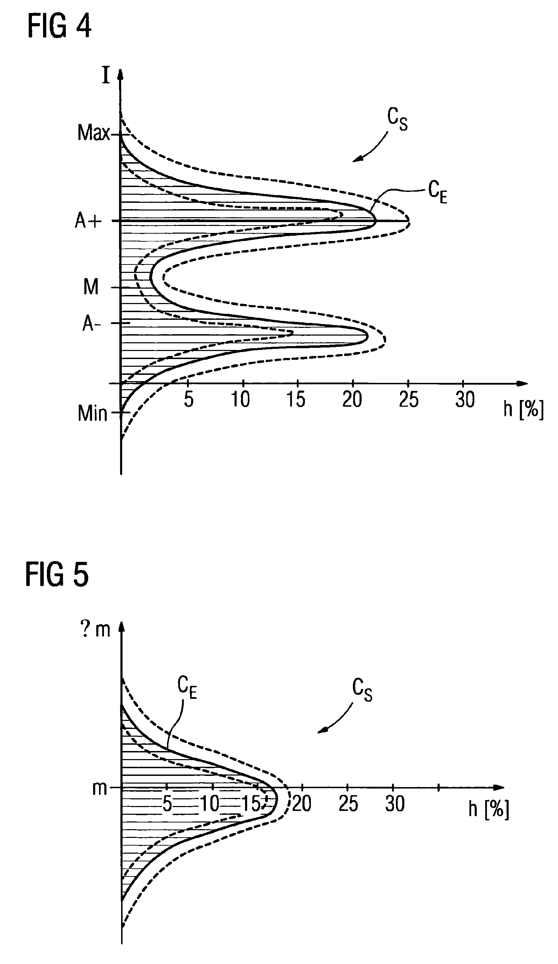

Aus diesem gemessenen Verlauf des Signals S werden mit Hilfe der Signalaufbereitungseinheit 16 die in den FIG 4 und FIG 5 gezeigten Signalcharakteristiken C_{S} erstellt. Der Signalverlauf gibt beispielsweise den Stromverlauf wieder, mit dem ein geregelter Motor von der Steuereinheit 6 mit Strom versorgt wird.

Gemäß dem Analyseschritt, wie er in FIG 4 dargestellt ist, wird eine statistische Verteilung der einzelnen Stromwerte aus dem Signalverlauf ermittelt. Da es sich hier um analoge Signale handelt, werden die kontinuierlichen, nicht diskreten Werte des gemessenen Stromverlaufs durch die Wahl geeigneter Stromwert-Intervalle zu einzelnen diskreten charakteristischen Stromwerten umgewandelt und deren Häufigkeit h wird aufgetragen. Auf der Y-Achse ist in FIG 4 der Stromwert und auf der X-Achse ist der Wert für die prozentuale Häufigkeit h des jeweiligen Stromwerts angegeben. Die so erhaltene Häufigkeitsverteilung bildet die aktuelle Sinalcharakteristik C_{E}.

Ergänzend zu der Häufigkeitsverteilung ist in FIG 4 auch die zu erwartende Signalcharakteristik C_{E} als eine Art Hüllkurve aufgetragen. Die gestrichelten Hüllkurven geben hier den zulässigen Toleranzbereich für Abweichungen dar. Überschreitet die ermittelte Signalcharakteristik C_{S} diesen Toleranzbereich, so wird sie als anomale Signalcharakteristik C'ₛ gewertet. Bei dem dargestellten Beispiel ist zu erkennen, dass die ermittelten Signalcharakteristiken C_{S} sich innerhalb des vorgegebenen Toleranzbereichs bewegt. Am häufigsten werden hierbei erwartungsgemäß die Werte des oberen und unteren Arbeitsbereichs A+,A- eingenommen. Im vorliegenden Ausführungsbeispiel charakterisiert dies einen normalen Betriebszustand.

Aus dem gleichen Signalverlauf der FIG 3 lassen sich weitergehende Analysen und Ergebnisse ableiten. So ist gemäß FIG 5 die statistische Verteilung der Abweichung der einzelnen Stromwerte von dem gleitenden Mittelwert m aufgetragen. Anhand dieser Darstellung lässt sich beispielsweise erkennen, ob ein gleichmäßiger Signalverlauf oder ein sehr unruhiger Signalverlauf vorliegt. In FIG 4 ist der Wert der Abweichung auf der Y-Achse und die prozentuale Häufigkeit auf der X-Achse angegeben.

Die statistische Auswertung und Analyse lässt in Abhängigkeit des jeweiligen Signals S(Tᵢ) und in Abhängigkeit des jeweils gewählten Auswerteparameters p eine Vielzahl von Fehlerdiagnosen zu. So besteht beispielsweise die Möglichkeit, bei binären Signalen die Anzahl von Schaltvorgängen beispielsweise statistisch auszuwerten. Hierbei werden insbesondere für die Auswertung die charakteristischen Zeitintervalle ΔT zugrunde gelegt, die auch unterschiedlich sein können. Wenn ein Signal S (fast) nie schaltet, so weist dies beispielsweise auf einen Verdrahtungsfehler oder einen Leitungsbruch hin. Auch lassen sich mit der statistischen Auswertung Aussagen über die Korrelation zweier Signale S(Tᵢ) ableiten. So besteht häufig beispielsweise eine Abhängigkeit zwischen zwei verschiedenen Signalen S(Tᵢ) dahingehend, dass das erste Signal S(Tᵢ) im Zeitintervall ΔT eine bestimmte Anzahl von Schaltvorgängen aufweisen muss und das zweite Signal S(Tᵢ) im gleichen Zeitraum beispielsweise doppelt so oft schalten muss. Eine weitere Möglichkeit ist die Analyse der Häufigkeit des Auftretens, dass innerhalb des Zeitintervalls ΔT das Signal S(Tᵢ) eine vorgebbare Anzahl an Schaltvorgängen überschreitet. Beim Einsatz beispielsweise einer speicherprogrammierten Steuerung ist nämlich ausgeschlossen, dass in einem das Zeitintervall ΔT bestimmenden SPS-Zyklus mehrere Schaltvorgänge auftreten. Ist die Anlagenkomponente 4 ein Relais und zeigt dieses innerhalb des vorgegebenen charakteristischen Zeitintervalls ΔT eine übermäßige Anzahl an Schaltvorgängen auf, so ist dies ein Hinweis, dass das Relais nicht mehr sauber schaltet, sondern das so genannte "Prellen" zeigt. Aus der prozentualen Verteilung, wie lange ein Signal auf 1 bzw. auf 0 steht, lassen sich zudem Rückschlüsse auf eventuelle Verdrahtungsfehler oder ein Vertauschen der zugrunde liegenden Logik ziehen.

Auch bei analogen Signalen bietet die statistische Analyse ein geeignetes Instrument zur Fehlerermittlung, wie bereits anhand der FIG 3 bis 5 dargestellt wurde. Darüber hinaus besteht die Möglichkeit, die Anzahl der Durchgänge durch einen vorgegebenen Mittelwert innerhalb eines vorgegebenen Zeitintervalls ΔT zu analysieren. Eine erhöhte Anzahl von Nulldurchgängen könnte z.B. darauf hinweisen, dass das Signal S(Tᵢ) einer Störung unterliegt, nicht angesteuert wird, oder dass ein instabiler Regler vorhanden ist. Weiterhin besteht die Möglichkeit, binäre Signale als analoge Signale zu interpretieren und über diese Hilfskonstruktion die Anzahl der Durchgänge durch den Mittelwert zu extrahieren, um die Qualität eines Schaltvorgangs beispielsweise eines Relais zu beurteilen. Weiterhin können aus der Anzahl der Überschreitungen eines Maximalwerts oder Unterschreitung eines Minimalwerts Rückschlüsse auf logische Fehler, Auslegungsprobleme, Verdrahtungsfehler, etc. gezogen werden.

Insgesamt ist durch das hier vorgeschlagene Verfahren bereits durch die Auswertung von vergleichsweise geringen Datenmengen eine aussagekräftige Fehlersuche und Fehlerdiagnose auch im Sinne einer vorausschauenden Wartung ermöglicht.

## Patentansprüche

1. Verfahren zur Überwachung einer automatisierten industriellen Anlage (2), insbesondere zur vorausschauenden Wartung der Anlage (2), die eine Vielzahl von Anlagenkomponenten (4) aufweist, die während des Anlagenprozesses von einer zentralen Steuereinheit (6) aus automatisch mit Hilfe von Steuersignalen (S(Ti)) gesteuert werden, wobei
- für den Verlauf einer aus dem jeweiligen Steuersignal (S) abgeleiteten Größe eine zu erwartende Signalcharakteristik (CE) definiert wird, nämlich eine zu erwartende Häufigkeit oder Häufigkeitsverteilung,
- aus einem jeweiligen aktuellen Steuersignal (S(Ti)) der Wert einer Größe abgleitet und der Verlauf dieses Werts einer statistischen Analyse unterzogen wird, bei der eine Häufigkeit oder Häufigkeitsverteilung ermittelt wird, die als Ergebnis der statistischen Analyse eine aktuelle Signalcharakteristik (C) bildet, die mit der zu erwartenden Signalcharakteristik (CE) verglichen wird, wobei
- bei einer unzulässigen Abweichung von der zu erwartenden Signalcharakteristik (CE) die aktuelle Signalcharakteristik (CS) als eine anomale Signalcharakteristik (C'S) eingestuft wird.

2. Verfahren nach Anspruch 1,
bei dem die im Anlagenprozess auftretenden Steuersignale (S) verschiedenen Signaltypen (Ti) zugeordnet werden, wobei jedes Steuersignal (S) eines Signaltyps (Ti) gleichen allgemeinen Regeln gehorcht, und wobei zu jedem Signaltyp (Ti) zumindest eine zu erwartende Signalcharakteristik (CE(Ti)) vorgegeben wird, die mit der aktuellen Signalcharakteristik (CS) des aktuellen Steuersignals (S(Ti)) des gleichen Signaltyps (Ti) verglichen wird.

3. Verfahren nach Anspruch 1 oder 2,
bei dem ein für den Anlagenprozess charakteristisches Zeitintervall (OT) vorgegeben wird, für das die zu erwartende Signalcharakteristik (CE) definiert wird und bei dem die aktuelle Signalcharakteristik (CS) jeweils über das Zeitintervall (□T) erfasst und anschließend ausgewertet wird.

4. Verfahren nach einem der vorhergehenden Ansprüche, bei dem aus den ermittelten anomalen Signalcharakteristiken (C'S) Rückschlüsse auf Fehler gezogen werden, wie beispielsweise Verdrahtungsfehler, Softwarefehler oder logische Fehler, die nicht auf technische Fehlfunktionen der einzelnen Anlagenkomponenten zurückzuführen sind.

5. Verfahren nach einem der vorhergehenden Ansprüche,
bei dem zumindest zwei Steuersignale (S(Ti)) definiert miteinander korreliert sind und deren Signalcharakteristiken (CS) dahingehend analysiert werden, ob sie die Korrelation wiedergeben.

6. Verfahren nach einem der vorhergehenden Ansprüche,
bei dem das Steuersignal (S(Ti)) insbesondere ein Regelsignal mit einem sich verändernden Signalwert ist, aus dem ein gleitender Mittelwert (m) abgeleitet wird, der zur Analyse herangezogen wird.

7. Verfahren nach einem der vorhergehenden Ansprüche,
bei dem eine erkannte Anomalie automatisch in der Signalcharakteristik(CS) markiert wird.

## Claims

1. Method for monitoring an automated industrial plant (2), in particular for the anticipated maintenance of the plant (2), which has a plurality of plant components (4), which are automatically controlled during the plant process by a central control unit (6) with the aid of control signals (S(Ti)), with
- a signal characteristic (CE) to be expected being defined for the course of a variable derived from the respective control signal (S), namely a frequency or frequency distribution to be expected,
- the value of a variable being derived from a respective current control signal (S(Ti)) and the course of this value being subjected to a statistical analysis, in which a frequency or frequency distribution is determined, which forms a current signal characteristic (C) as the result of the statistical analysis, said signal characteristic being compared with the signal characteristic (CE) to be expected, with
- in the case of an impermissible deviation from the signal characteristic (CE) to be expected, the current signal characteristic (CS) is classified as an anomalous signal characteristic (C' S) .

2. Method according to claim 1,
in which the control signals (S) occurring in the plant process are assigned to different signal types (Ti), with each control signal (S) of a signal type (Ti) obeying the same general rules and with at least one signal characteristic (CE(Ti)) to be expected being prescribed for each signal type (Ti), said signal characteristic being compared with the current signal characteristic (CS) of the current control signal (S(Ti)) of the same signal type (Ti).

3. Method according to claim 1 or 2,
in which a time interval (T) which is characteristic of the plant process is predetermined, for which the signal characteristic (CE) to be expected is defined and in which the current signal characteristic (CS) is recorded over the time interval (T) in each instance and is then evaluated.

4. Method according to one of the preceding claims, in which conclusions on errors are drawn from the determined anomalous signal characteristics (C'S), like for instance wiring errors, software errors or logical errors, which are not attributable to technical malfunctions of the individual system components.

5. Method according to one of the preceding claims, in which at least two control signals (S(Ti)) are correlated in a defined fashion with one another and the signal characteristics (CS) of which are analysed accordingly to determine whether they reproduce the correlation.

6. Method according to one of the preceding claims, in which the control signal (S(Ti)) is in particular a control signal with a changing signal value, from which is derived a moving average (m) which is used for analysis.

7. Method according to one of the preceding claims, in which a detected anomaly is automatically marked in the signal characteristic (CS).

## Revendications

1. Procédé de contrôle d'une installation ( 2 ) industrielle automatisée, notamment pour l'entretien prévisionnel de l'installation ( 2 ) qui a une pluralité de composants ( 4 ) d'installation qui, pendant le processus de l'installation, sont commandés par une unité ( 6 ) centrale de commande automatiquement à l'aide de signaux ( S( ( Ti ) ) de commande, dans lequel,
- on définit, pour la courbe d'une grandeur déduite du signal ( S ) de commande respective, une caractéristique ( CE ) de signal à laquelle on s'attend, à savoir une fréquence ou une répartition de fréquence à laquelle on s'attend,
- à partir d'un signal ( S( ( Ti ) ) de commande instantanée, on déduit la valeur d'une grandeur et on soumet la courbe de cette valeur à une analyse statistique dans laquelle on détermine une fréquence ou une répartition de fréquence qui forme en résultat de l'analyse statistique une caractéristique ( C ) instantanée de signal, que l'on compare à la caractéristique ( CE ) de signal à laquelle on s'attend, dans lequel
s'il y a un écart inadmissible par rapport à la caractéristique ( CE ) de signal à laquelle on s'attend, on classe la caractéristique ( CS ) instantanée de signal comme étant une caractéristique ( C'S ) de signal anormale.

2. Procédé suivant la revendication 1,
dans lequel on associe les signaux ( S ) de commande se produisant dans le processus de l'installation à des types ( ( Ti ) de type de signal différents, chaque signal de commande d'un type ( Ti ) de signal obéissant à de mêmes règles générales et dans lequel on prescrit à chaque type ( Ti ) de signal au moins une caractéristique ( CE ( Ti ) ) de signal à laquelle on s'attend, que l'on compare à la caractéristique ( CS ) instantanée de signal du signal ( S( ( Ti ) ) instantanée de commande du même type ( Ti ) de signal.

3. Procédé suivant la revendication 1 ou 2,
dans lequel on prescrit un intervalle ( □T ) de temps caractéristique pour le processus de l'installation, intervalle pour lequel on définit la caractéristique ( CE ) de signal à laquelle on s'attend et dans lequel on détecte la caractéristique ( CS ) instantanée de signal respectivement par l'intervalle ( □T ) de temps et on l'exploite ensuite.

4. Procédé suivant l'une des revendications précédentes,
dans lequel à partir des caractéristiques ( C'S ) de signal anormales qui ont été déterminées, on tire des conclusions sur des défauts, comme par exemple des défauts de câblage, des défauts de logiciel ou des défauts logiques, qui ne sont pas à mettre au compte de fonctionnement technique défectueux des divers composants de l'installation.

5. Procédé suivant l'une des revendications précédentes, dans lequel on corrèle entre eux de manière définie au moins deux signaux ( S( ( Ti ) ) de commande et on analyse leurs caractéristiques ( CS ) de signal pour savoir si elles reproduisent la corrélation.

6. Procédé suivant l'une des revendications précédentes, dans lequel le signal ( S( ( Ti ) ) de commande est notamment un signal de régulation, ayant une valeur de signal qui se modifie et à partir de laquelle on déduit une valeur ( m ) moyenne mobile dont on tire partie pour l'analyse.

7. Procédé suivant l'une des revendications précédentes, dans lequel on repère une anomalie détectée automatiquement dans la caractéristique ( CS ) de signal.
